# Europäisches Patentamt
# European Patent Office
# Office européen des brevets

(19)

(11) Publication number: **0 007 959**
**B1**

(12)

# EUROPEAN PATENT SPECIFICATION

(45) Date of publication of patent specification: **22.02.84**

(51) Int. Cl.³: **A 61 C 5/02**

(21) Application number: **78900276.3**

(22) Date of filing: **15.11.78**

(86) International application number:
**PCT/JP78/00026**

(87) International publication number:
**WO 79/00300 31.05.79 Gazette 79/11**

(54) **BORING NEEDLE FOR TREATMENT OF A DENTAL ROOT CANAL.**

(30) Priority: **17.11.77 JP 153480/77**
**13.09.78 JP 113261/78**

(43) Date of publication of application:
**20.02.80 Bulletin 80/4**

(45) Publication of the grant of the patent:
**22.02.84 Bulletin 84/8**

(84) Designated Contracting States:
**FR**

(56) References cited:
**FR - A - 2 399 236**
**JP - B - 52 009 950**
**US - A - 1 818 627**
**US - A - 3 562 913**
**US - A - 3 713 221**
**US - A - 3 924 334**

(73) Proprietor: **COLPO, LTD**
**14-13, Shimouma 3-chome**
**Setagaya-ku Tokyo, 154 (JP)**

(72) Inventor: **TAKASUGI, Mitsuo**
**74, Kuritaya**
**Kanagawa-ku, Yokohama-shi Kanagawa 221 (JP)**
Inventor: **OKUYAMA, Yoshio**
**13-7, Shimouma 3-chome**
**Setagaya-ku Tokyo, 154 (JP)**

(74) Representative: **Rodhain, Claude**
**30, rue La Boétie**
**F-75008 Paris (FR)**

Courier Press, Leamington Spa, England.

Boring needle for treatment of a dental root canal

Field of the Invention

This invention relates to a boring needle device for treatment of a dental root canal, whose boring needle used for treating the dental root canal can be adjusted, without ressort to any special adjustment tool, to a boring or drilling effective needle length which corresponds to the depth of the canal pre-determined by means of an X-ray photograph or a probe for root canals.

Background of the Invention

U.S. Patent 1 818 627 discloses a device for the treatment of a dental root canal comprising a grip member having a head portion and a shaft portion, an instrument secured in said shaft portion and a sleeve member surrounding said instrument and close fitted to said grip member in elastic relation therewith, the mating surfaces of said grip member and said sleeve member having groves and ridges enabling controlled relative movement of said grip member and said sleeve member, whereby to define the exposed length of said instrument by self-retention of said grip member relative to said sleeve member. This design is not applicable to a boring needle device, as the sleeve member, engaged by the surface of the tooth would be subjected to a rotational movement and would move axially relative to the grip member.

The present invention is characterised in that each of said mating surfaces includes a respective plurality of grooves and ridges, said mating surfaces being relatively radially deformable in response to relative axial sliding movement of said mating surfaces in mutual contact one within the other, whereby to enable both controlled relative stepwise axial sliding movement of said grip member relative to said sleeve member.

A rotary movement applied to the sleeve will not cause corresponding axial movement of the sleeve relative to the grip and the risk of varying the stop position is thus considerably diminished.

U.S. Patent 3 562 913 discloses a device in which a sleeve member is in resilient relation with the rest of the device, the mating surfaces having cooperating annular ribs and grooves. This arrangement is applicable to a rotary instrument. However, the sleeve mates directly with the instrument itself, and must be removed completely therefrom in order to change the exposed length of the instrument. The sleeve is in the form of a washer, forming a single rib, and the mating ribs on the instrument are of small dimensions. This arrangement is accordingly awkward to manipulate and of relatively fragile structure due to the small dimensions of the mating ribs and the sleeve itself, and due to the nature of the adjustment manipulation (snapping the sleeve on and off). It is also easy to manufacture, since the mating ribs are provided on the instrument itself rather than the grip. Also in use the ribs must project into the tooth when the exposed length of the instrument is longer, which may be indesirable.

U.S. Patent 3 924 334 discloses a rotary boring or reaming needle device with an adjustable sleeve and shank. However, the adjustment requires use of a tool and manipulation of a locking ring, and is accordingly relatively cumbersome. Moreover the locking ring restricts space with in the mouth otherwise available for other dental instruments.

Brief Description of the Accompanying Drawings

Fig. 1 shows a longitudinal sectional view of one embodiment of the invention;

Fig. 2 similarly shows another embodiment of the invention;

Fig. 3 similarly shows still another embodiment of the invention; and

Fig. 4 also similarly shows a further embodiment of the invention.

Embodiments of the Invention

Embodiments of the invention will be described in reference to the accompanying drawings.

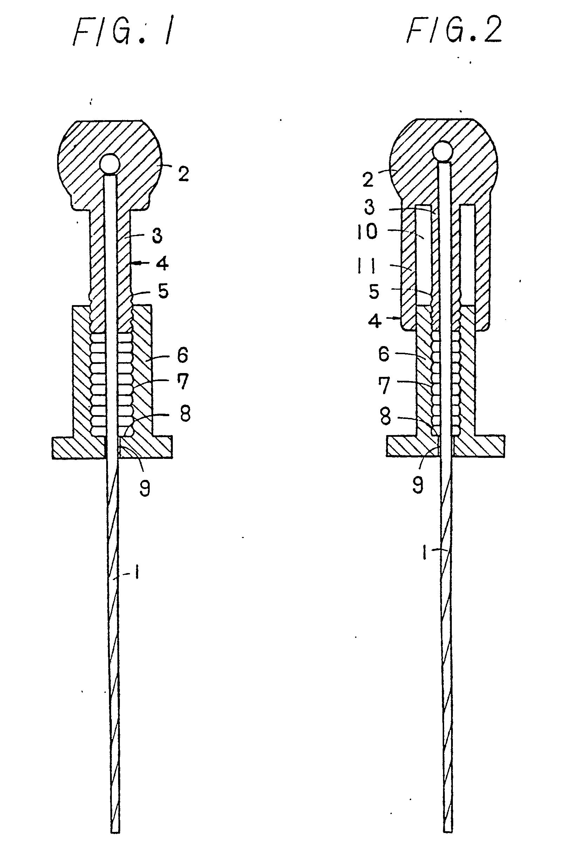

The embodiment shown in Fig. 1 has as grip member 4 having a head portion 2 and a shaft portion 3 of rigid synthetic resin centrally depending from the head portion, and a needle 1 having its proximal end portion coaxially embedded in the shaft portion 3. The shaft portion 3 has a plurality of annular ridges 5 formed in the circumferential surface adjacent the distal end thereof to be spaced from each other at a predetermined distance of pitch, say, at a distance of 0.5 mm. A sleeve member 6 of elastic synthetic resin is fitted on the shaft portion 3 of the grip member. The sleeve member 6 has a plurality of annular grooves 7 formed entirely in the inner circumferential surface thereof to be closely engaged in complementary relation with the ridges 5 on the shaft portion 3, and a bottom portion 8 in which is formed a guide aperture 9 through which the needle extends.

In use, the grip member 4 is manipulated to force-slide relative the sleeve member 6 relative to the shaft portion 3 within it, with the needle extending through aperture 9 in the bottom 8, to cause the annular ridges 5 in the shaft portion 3 to stepwisely shift in engagement with annular grooves 7 in the sleeve member 6 by the aid of elasticity of the sleeve member 6, allowing the members to slide relative to each other at the rate of the above mentioned minutely determined pitch, varying their total length. This permits the length of the needle 1 projecting from the sleeve member 6 to be adjusted in units of the small distance of the individual pitch between the grooves. In other words, manipulation of the shaft portion 3 of grip member 4 to slide in the sleeve member 6 enables the projecting length of needle 1 to vary to the distance corresponding to the depth of a dental root canal to be treated.

Another embodiment of the invention is shown in Fig. 2 and is similar to the embodiment above described, except that the grip member 4 has an outer sleeve portion 11 integrally formed about the shaft portion 3 and spaced therefrom by an annular space 10 corresponding to the wall thickness of the sleeve member 6. A similar manipulation may be performed as in the first embodiment, with the sleeve member 6 being received in the space 10 between the shaft and the outer sleeve portions 3 and 11 of the grip member 4, to vary the overlap of the fitted grip and sleeve members 4 and 6 and accordingly the length of the needle projecting from the sleeve member 6.

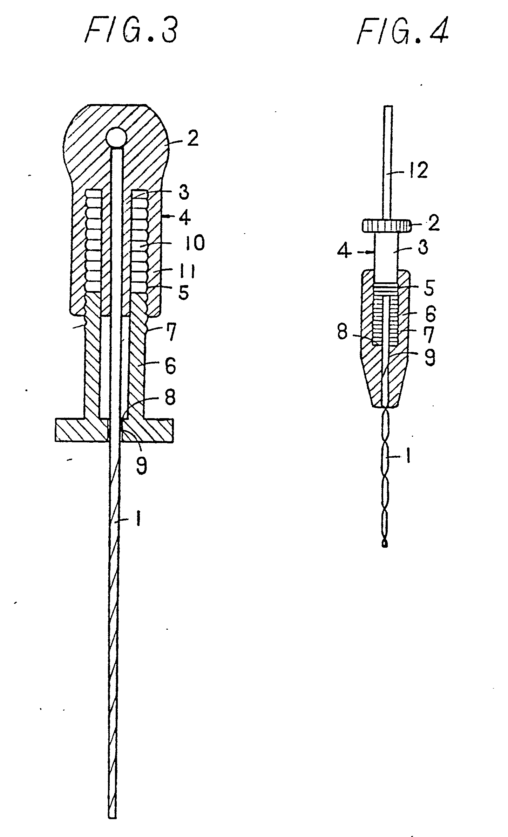

Still another embodiment shown in Fig. 3 is similar to that of Fig. 2, except that the ridge/groove means 5 and 7 are not formed in the circumferential surface of shaft portion 3 and in the inner circumferential surface of the sleeve member 6, but in the inner circumferential surface of the outer sleeve portion 11 of the grip member 4 and in the circumferential surface of the sleeve member 6 closely fitted with each other. A similar manipulation may be made to adjust the projecting length of the needle.

A further embodiment is shown in Fig. 4 which is similar to the first embodiment, except that the sleeve member 6 is tapered toward the lower end to have a distal end face which is adapted to abut against the appropriate location of a tooth for facilitating the boring of the root canal.

In each of the embodiments, a chuck grip stem 12 may be provided in the grip member 4 to extend in the opposite direction to the boring needle, for coupling with a power driven or manual chuck for driving the needle.

Once the length of the needle projecting from the sleeve member 6 has been adjusted to the length corresponding to the measured depth of the root canal of the tooth to be treated, the needle device is manipulated with the head portion being thumbed by the dentist to perform the drilling or boring operation until the lower end face of the sleeve member 6 reaches the top face of the tooth, which precisely indicates that the distal end of the needle has reached the predetermined depth to enable the dentist to perform fully the intended operation.

The grip and the sleeve members 4 and 6 are elastically fitted on circumferential surfaces in which a plurality of ridges 5 and grooves 7 are formed with a predetermined very small pitch, permitting the grip member 4 and the sleeve member 6 to be fitted for stepwise sliding under manually exerted force and be frictionally self-retained relatively at any adjusted position. The projecting length of the needle can be thus easily finely adjusted to a position corresponding to the depth of the dental root canal, without any special operator's skill being called for.

## Claim

A boring needle device for the treatment of a dental root canal, comprising a grip member (4) having a head portion (2) and a shaft portion (3), a boring needle (1) secured in said shaft portion (3), and a sleeve member (6) surrounding said boring needle (1) and close-fitted to said grip member (4) in elastic relation therewith, the mating surfaces (5, 7) of said grip member (4) and said sleeve member (6) having grooves and ridges enabling controlled relative movement of said grip member and said sleeve member, whereby to define the exposed length of said boring needle, and self retention of said grip member (4) relative to said sleeve member in the adjusted positions, said grooves and ridges being annular and spaced at constant pitch, characterised in that each of said mating surfaces (5, 7) includes a respective plurality of grooves and ridges, said mating surfaces being relatively radially deformable in response to relative axial sliding movement of said mating surfaces (5, 7) in mutual contact one within the other, whereby to enable both controlled relative stepwise axial sliding movement of said grip member (4) relative to said sleeve member (6).

## Revendication

Dispositif à aiguille foreuse pour le traitement d'un canal de racine dentaire, comprenant un corps de préhension (4) ayant une partie faisant tête (2) et une partie faisant tige (3), une aiguille foreuse (1) solidarisée dans ladite partie faisant tige (3), et un corps en manchon (6) entourant ladite aiguille foreuse (1) et ajusté serré audit corps de préhension (4) en relation élastique avec celui-ci, les surfaces (5, 7) qui s'épousent dudit corps de préhension (4) et dudit manchon (6) présentant des sillons et des arêtes permettant un déplacement relatif contrôlé dudit corps de préhension et du manchon l'un par rapport à l'autre, afin de délimiter la longueur exposée de ladite aiguille foreuse, et une auto-rétention dudit corps de préhension (4) par rapport audit manchon dans les positions d'ajustement, les sillons et les arêtes étant annulaires et espacés avec un pas constant, caractérisé en ce que chacune desdites surfaces qui s'épousent (5, 7) comprend une série respective de sillons et arêtes, lesdites surfaces qui s'épousent étant relativement déformables dans le sens radial sous l'action d'un déplacement relatif en glissement dans le sens axial des surfaces en contact mutuel l'une avec l'autre, de façon à permettre le déplacement relatif contrôlé de glissement axial par pas successifs dudit corps de préhension (4) par rapport audit manchon (6), dans les deux sens.

## Patentanspruch

Vorrichtung mit einem Bohreinsatz zur Behandlung des Zahnwurzelkanals, bestehend aus einem Griff (4) mit Kopf (2) und Stiel (3), wobei der Bohreinsatz (1) in dem Stiel (3) verankert ist, und aus einer Hülse (6), die den Bohreinsatz (1) umgibt und mit dem Griff (4) direkt elastisch verbunden ist, wobei die aneinander angepaßten Flächen (5, 7) des Griffs (4) und der Hülse (6) Nuten und Vorwölbungen aufweisen, die aufeinander abgestimmte Bewegungen des Griffs und der Hülse ermöglichen, wodurch die freie Länge des Bohreinsatzes bestimmt und die Arretierung des Griffs (4) und der Hülse (6) in einer eingestellten Position bewerkstalligt werden kann, wobei Nuten und Vorwölbungen ringförmig ausgebildet und mit konstantem Abstand voneinander angebracht sind, dadurch gekennzeichnet, daß jede der beiden aneinander angepaßten Flächen (5, 7) eine Vielzahl von Nuten bzw. Vorwölbungen aufweist, wobei die aneinander angepaßten Flächen in wechselweisem Kontakt radial deformierbar entsprechend einer axialen Gleitbewegung der Flächen (5, 7) sind, wodurch eine definierte stufenweise axiale Gleitbewegung des Griffs (4) relativ zur der Hülse (6) in beider Richtungen möglich ist.

FIG. 1

FIG. 2

## FIG.3

## FIG.4